# EUROPÄISCHE PATENTSCHRIFT

(11) **EP 1 626 187 B1**
(45) Veröffentlichungstag und Bekanntmachung des Hinweises auf die Patenterteilung: **09.12.2009**
(21) Anmeldenummer: 05016655.2
(22) Anmeldetag: 01.08.2005
(51) Int. Cl.: F16B 31/02, H01R 4/30

(54) **Abreissschraube, zugehöriges System und Verfahren zum Eindrehen der Abreissschraube**
Shearable screw, related system and process for driving the shearable screw
Vis frangible, système associé et procédé pour entraîner cette vis frangible

(30) Priorität: 11.08.2004 DE 102004039811
(43) Veröffentlichungstag der Anmeldung: 15.02.2006
(73) Patentinhaber: Pfisterer Kontaktsysteme GmbH & Co. KG, 73650 Winterbach (DE)
(72) Erfinder: Frank, Erich, 73269 Hochdorf (DE); Weinmann, Wolfgang, 73614 Schorndorf (DE)
(74) Vertreter: Bartels & Partner

(56) Entgegenhaltungen:
- GB-A- 1 503 156

## Beschreibung

Die Erfindung betrifft eine Abreißschraube, eine Schraubverbindungsvorrichtung mit einer solchen Abreißschraube, ein System aus einer Abreißschraube und einem Schubelement sowie ein Verfahren zum Eindrehen der Abreißschraube.

Beispielsweise in der Schraubverbindungstechnik von Kabelleitern für die Energietechnik besteht die Anforderung, dass Abreißschraube von Verbindungselementen, insbesondere Schraubklemmen, immer nahe der Oberfläche des Klemmenkörpers abreißen, insbesondere dass die Verbindungselemente nicht über die Oberfläche des Klemmenkörpers überstehen, da anschließend über den Klemmenkörper Isolierschichten aufgebracht werden, beispielsweise Isoliermuffen, und jeder Überstand über den Klemmenkörper diese Isolationsschichten beschädigen kann.

Aus der WO 96/31706 ist ein Befestigungsmittel bekannt, bei dem die Abreißdrehmomente von der Schraubenspitze zum Schraubenkopf zunehmen. Diese Befestigungsmittel weisen diskrete Sollbruchstellen auf, die durch Einschnitte in den Schraubenbolzen definiert sind.

Aus der EP 0 692 643 A1 ist ein Befestigungsmittel mit diskreten Sollbruchstellen bekannt, die durch Einschnitte in das Außengewinde definiert sind. Eine axiale Stufenbohrung im Gewindebereich weist einen in Richtung auf das Kopfbereich-nahe Ende zunehmenden Durchmesser auf. In den Gewindebereichen zwischen den Sollbruchstellen ist die Dicke der sich zwischen Bohrung und Außengewinde ergebenden Wandung konstant.

Auch die EP 0 984 176 A1 zeigt eine Abreißschraube, mit diskreten Sollbruchstellen. Auch hier ist in den Gewindebereichen zwischen den Sollbruchstellen die Dicke der sich zwischen der Bohrung und dem Außengewinde ergebenden Wandung konstant.

Aus der DE 199 60 198 A1 ist eine Klemmschraube bekannt, die ebenfalls diskrete Sollbruchstellen aufweist. In eine Werkzeugaufnahme ist ein Distanzierelement einsetzbar, das einen Anschlag für das Einführen eines die Klemmschraube eindrehenden Werkzeuges bildet. Durch die Wahl der Länge des Distanzierelements ist die beim Betätigen des Werkzeugs wirksame Sollbruchstelle bestimmbar.

Aus der nachveröffentlichten DE 103 12 147 A1 ist eine Abreißschraube mit einem mindestens abschnittsweise durchgehenden Außengewinde und mit einer Bohrung bekannt, wobei die Dicke der sich im Gewindebereich zwischen Bohrung und Außengewinde ergebenden Wandung ausgehend von einem Kopfbereich-fernen Ende zu einem Kopfbereich-nahen Ende kontinuierlich zunimmt.

Aus der DE 102 34 475 A1 ist eine Abscherschraube mit mehreren axial getrennten Sollbruchstellen bekannt, die eine Reihe von Scherebenen bilden. Der das durchgehende Außengewinde tragende Schaft hat eine axiale Sacklochbohrung, von der axial beabstandete Hinterschneidungen radial nach außen in das Material des Schaftes hinein abgehen.

Die EP 1 376 764 A2 zeigt eine Mehrfach-Abscherschraube, die einen zylindrischen Körper mit einem außenseitigen durchgehenden Gewinde und einem Angriffsflächen für ein Antriebswerkzeug aufweisenden Kopf an dem einen Ende des Körpers aufweist. Dabei sind mehrere axial getrennte Sollbruchstellen vorgesehen, die eine Reihe von Scherebenen bilden. Der Körper weist dabei einen zentralen Zapfen mit unrundem Querschnitt auf, in den axial beabstandete radiale Einstiche eingearbeitet sind, sowie eine oder mehrere Scheiben, die auf den Zapfen aufgesteckt sind.

Die EP 0 688 960 A1 zeigt eine Abreißschraube mit einem Außengewindeabschnitt, einem Kopfabschnitt, einem eine Sollbruchstelle bildenden Verjüngungsabschnitt, der zwischen dem Außengewindeabschnitt und dem Kopfabschnitt vorgesehen ist, sowie einem einen Klemmkontakt ermöglichenden Endabschnitt. Die Abreißschraube weist weiterhin eine Gewindehülse auf, die sich zumindest teilweise entlang des Außengewindeabschnitts erstreckt und ihrerseits ein Außengewinde aufweist.

Die EP 0 634 811 A1 zeigt eine Abscherschraube mit einem ein Außengewinde aufweisenden Gewindekörper sowie einem Abreißkopf mit einer Angriffsfläche für ein Werkzeug. Zwischen dem Gewindekörper und dem Abreißkopf befindet sich ein Übergangsbereich, der einen kleineren Außendurchmesser hat als der Gewindekörper und der Abreißkopf. Der Übergangsbereich verjüngt sich von dem Abreißkopf zum Gewindekörper in zunehmender Weise und endet in einer in Umfangsrichtung verlaufenden Abscherrille. Diese liegt tiefer als das dem Abreißkopf zugewandte obere Ende des Gewindekörpers.

Die EP 0 470 388 A2 zeigt eine Abreißschraube mit einem Gewindeabschnitt, einem Kopfabschnitt und einem dazwischen angeordneten verjüngenden Bereich. Im Kopfabschnitt und zumindest teilweise in den Gewindeabschnitt hinein erstreckt sich eine Innenausnehmung, wobei im Bereich des Kopfabschnitts eine Sicherungseinrichtung in der Innenausnehmung vorgesehen ist, sodass die Innenausnehmung im Bereich des Gewindeabschnitts vor dem Abreißen unzugänglich ist und erst nach dem Abreißen des Kopfabschnitts zugänglich wird.

Die WO 02/18803 A1 zeigt eine Abreißschraube mit einem Kopfabschnitt, einem Gewindeabschnitt und einem dazwischenliegenden verjüngenden Bereich, wobei eine Bohrung sich über den Kopfbereich, den verjüngenden Bereich bis in den Gewindebereich hinein erstreckt. Die Bohrung ist aufgefüllt mit einem zähen, elastischen oder weichmetallischen Material, durch das ein Wegschleudern des abgerissenen Teils verhindert werden soll.

Alle bekannten Abreißschrauben weisen diskrete Sollbruchstellen mit einer oder mehreren Unterbrechungen des tragenden Gewindes auf. Dies kann nachteilig sein, etwa dann, wenn die Abreißschraube zwar an einer in den Klemmenkörper eingeführten Stelle abreißt, dabei allerdings die Anzahl der in Eingriff befindlichen Gewindewindungen nur gering ist und dadurch die Zuverlässigkeit der hergestellten Schraubverbindung nicht ausreichend gewährleistet ist.

Bei den bekannten Abreißschrauben erfolgt das Abreißen im wesentlichen aufgrund von die Festigkeit der Abreißschraube übersteigenden Torsionsspannungen. Aufgrund der konstruktiv bedingten hohen Festigkeit gegenüber Torsionsbeanspruchungen sind geringe Materialstärken im Bereich der vorgesehenen Abreißstellen erforderlich, die nur geringe Fertigungstoleranzen beim Herstellen erlauben. Auch der Aufwand für das Bereitstellen der Werkzeugangriffsfläche an dem Schraubenkopf der bekannten Abreißschrauben ist aufwendig.

Der Erfindung liegt daher die Aufgabe zugrunde, eine Abreißschraube bereitzustellen, welche die Nachteile des Standes der Technik überwindet. Insbesondere soll die erfindungsgemäße Abreißschraube zuverlässig an der geeignetsten Stelle abreißen und dauerhaft eine mechanisch und elektrisch stabile Verbindung gewährleisten. Die Abreißschraube soll darüber hinaus kostengünstig herstellbar sein.

Diese Aufgabe ist durch die im Anspruch 1 bestimmte Abreißschraube gelöst. Besondere Ausführungsarten der Erfindung sind in den Unteransprüchen bestimmt. Eine zugehörige Vorrichtung zum Schraubverbinden insbesondere von elektrischen Leitern mit anderen Leitern und/oder mit einem Klemmenkörper, ein System aus Abreißschraube und Schubelement sowie ein Verfahren zum Eindrehen einer Abreißschraube sind in den nebengeordneten Ansprüchen bestimmt.

Dadurch, dass das Abreißen nicht mehr im Wesentlichen durch auftretende Torsionskräfte erfolgt, sondern durch Zugspannungen, kann die Wandung der Abreißschraube im vorgesehenen Abreißbereich dicker ausgeführt werden, sodass größere Fertigungstoleranzen möglich sind und dennoch besonders zuverlässig die vorgebbaren Abreißdrehmomente und die vorgebbaren Befestigungskräfte präzise eingehalten werden.

Außerdem ergibt sich dadurch ein vorteilhaftes Abreißverhalten, insbesondere kommt es nicht zu einem schlagartigen Abreißen, sondern der Abreißvorgang verläuft kontinuierlich. Der abgerissene Teil der Abreißschraube wird nicht weggeschleudert, wie dies bei einigen bekannten Abreißschrauben der Fall ist, sondern fällt mit geringer Beschleunigung ab. Dadurch ist auch eine Verletzungsgefahr für den Monteur ausgeschlossen und die abgerissenen Teile können problemlos aufgenommen oder eingesammelt werden, so dass auch eine Kurzschlussgefahr durch abgerissene und herumliegende Teile der Abreißschraube ausgeschlossen ist.

Die Abreißschraube weist axial von der Abstützung für das Schubelement beabstandet, und in einem dem ersten Ende der Abreißschraube näheren Abschnitt eine weitere Angriffsfläche auf, an der beim Eindrehen der Abreißschraube die das Abreißen bewirkenden Zugkräfte in die Abreißschraube einleitbar sind.

Vorzugsweise ist die Bohrung in der Abreißschraube als Sacklochbohrung ausgeführt. Die Bodenfläche der Bohrung bildet die Abstützung für das Schubelement. Die Bohrung kann auch als Stufenbohrung vorgesehen sein, auch als stufenförmige Durchgangsbohrung, wobei bestimmte zugeordnete Stufen die Abstützung für das Schubelement bilden. Die Bohrung kann darüber hinaus eine Werkzeugangriffsfläche aufweisen, vorzugsweise im Bereich der Abstützung, mittels der die Abreißschraube nach dem Abreißen lösbar und/oder weiter eindrehbar ist.

Das Eindrehen der Abreißschraube beispielsweise in einen Klemmenkörper kann dabei über das Schubelement erfolgen, das hierzu eine Werkzeugsangriffsfläche aufweist. Insbesondere ist es nicht erforderlich, dass die Abreißschraube selbst eine Werkzeugsangriffsfläche aufweist. Dadurch ist das Herstellverfahren für die Abreißschraube weiter vereinfacht, insbesondere kann die Abreißschraube im Wesentlichen, mit Ausnahme von vorzusehenden Gewinden, rotationssymmetrisch ausgebildet sein.

Die erfindungsgemäßen Abreißschrauben können grundsätzlich die aus dem Stand der Technik bekannten diskreten Sollbruchstellen aufweisen, die beispielsweise durch radiale Einschnitte in die Abreißschraube von außen oder von innen in die Wandung im Bereich der Bohrung erfolgen.

Dadurch, dass die Abreißschraube in der Bohrung in Axialrichtung ausgehend von dem ersten Ende zunächst ein Innengewinde aufweist und von dem ersten Ende weiter beabstandet eine Abstützung aufweist, an der sich ein in die Bohrung eindrehbares Schubelement abstützen kann, kann durch Eindrehen des Schubelements in der Abreißschraube eine Zugspannung erzeugt werden, die im Wesentlichen für ein Abreißen verantwortlich ist. Das Schubelement erzeugt in der Abreißschraube eine Zugspannung und kann daher auch als Zugspannungselement oder Spannelement bezeichnet werden.

Bei dem Innengewinde handelt es sich vorzugsweise um ein metrisches Gewinde mit einem oder mehreren Gewindegängen. Für viele Anwendungsfälle ist es vorteilhaft, wenn der Durchmesser des Innengewindes möglichst groß ist, damit ausreichend hohe Zugkräfte in die Abreißschraube eingeleitet werden können. Für einige Anwendungsfälle ist es vorteilhaft, wenn die Steigung des Gewindes möglichst groß ist. Alternativ oder ergänzend zu einem Gewinde kann auch jede andere konstruktive Anordnung verwendet werden, die zu einer gekoppelten Dreh-/Hubbewegung führt, durch welche das Schubelement beim Drehen auch in axialer Richtung bewegt wird und dabei durch die Anlage an der Abstützung eine Zugspannung in die Abreißschraube einleitet.

Vorzugsweise weist die Bohrung im Bereich des Innengewindes eine kleinere Weite auf als in einem von dem ersten Ende weiter beabstandeten Bereich. Dies kann beispielsweise durch einen Hinterschnitt realisiert sein. In einer solchen Ausführungsart kann als Schubelement beispielsweise ein üblicher zylindrischer Gewindestift verwendet werden. Ein solcher Hinterschnitt ist dagegen nicht erforderlich, wenn als Schubelement ein Gewindestift verwendet wird, der neben einem ein Außengewinde aufweisenden Abschnitt noch einen zapfenartigen Abschnitt aufweist, der gegenüber dem Außengewinde einen geringeren Durchmesser aufweist.

In einer besonderen Ausführungsart der Erfindung nimmt die Dicke der sich im Gewindebereich zwischen Bohrung und Außengewinde ergebenden Wandung über mindestens einen Teil ihrer axialen Erstreckung in Richtung auf das erste Ende kontinuierlich zu. Im Unterschied zum Stand der Technik sind dadurch nicht nur diskrete Sollbruchstellen realisiert, sondern es ergeben sich über einen Bereich von vorzugsweise mehreren Millimetern oder sogar Zentimetern kontinuierlich mögliche Abreißstellen, durch welche die Abreißschraube beispielsweise stets bündig zur Oberfläche eines Klemmenkörpers abreißen kann. Diese Ausgestaltung kann auch mit den aus dem Stand der Technik bekannten diskreten Sollbruchstellen kombiniert werden.

In einer bevorzugten Ausführungsform liegt die erste mögliche Abreißstelle mit dem geringsten Abreißdrehmoment an dem bodenseitigen Ende der Bohrung. Das erforderliche Abreißdrehmoment steigt zum ersten Ende hin vorzugsweise stufenlos an, insbesondere gleichmäßig fortlaufend oder sogar linear über der axialen Länge. Die sich im Gewindebereich zwischen der Bohrung und dem Außengewinde ergebende Wandung weist eine Dicke auf, die vorzugsweise deutlich geringer ist als der Durchmesser der Bohrung, insbesondere geringer als 50 % des Durchmessers der Bohrung und vorzugsweise geringer als 10 % des Durchmessers der Bohrung. Die Dicke ist letztlich abhängig von dem verwendeten Werkstoff für die Abreißschraube und von dem gewünschten Abreißdrehmoment. Typische Werte für die Dicke der Wandstärke liegen bei elektrischen Schraubverbindern für die Energieversorgungstechnik bei einigen Zehntel Millimetern bis einige Millimeter.

In einer besonderen Ausführungsart nimmt der Durchmesser der Bohrung über mindestens einen Teil ihrer axialen Erstreckung ausgehend vom ersten Ende zum zweiten Ende kontinuierlich zu. Vorzugsweise ist die Bohrung über mindestens einen Teil ihrer axialer Erstreckung konisch, wobei der von den Kegelflächen eingeschlossene Winkel weniger als 5° beträgt, insbesondere weniger als 2° und vorzugsweise etwa 0,8°.

Die Veränderung der Dicke der Wandung kann alternativ oder ergänzend zu einer Veränderung des Durchmessers der Bohrung auch durch eine Veränderung der Außenkontur der Abreißschraube realisiert werden, beispielsweise durch eine konische Form der Abreißschraube mindestens abschnittsweise entlang der Längsachse im Bereich zwischen Außengewinde und Bohrung. So kann beispielsweise die das Außengewinde tragende Mantelfläche der Abreißschraube konisch ausgebildet sein. Der Konus kann dabei vor dem Einschneiden des Außengewindes hergestellt werden, beispielsweise durch ein entsprechendes Überdrehen der Mantelfläche, oder beim Einschneiden des Außengewindes hergestellt werden, beispielsweise durch einen entsprechenden radialen Vorschub des Gewindescheidewerkzeuges während des Einschneidens des Gewindes.

Durch die konische Bohrung nimmt das Abreißdrehmoment in Richtung auf das erste Ende kontinuierlich zu, so dass die Schraube so weit wie möglich vom ersten Ende entfernt abreißt. Das aufnehmende Gewinde beispielsweise eines Klemmenkörpers wirkt dabei stützend auf das Außengewinde und gewährleistet, dass die Schraube stets an der Stelle abreißt, an der die Schraube aus dem Klemmenkörper austritt.

In einer besonderen Ausführungsart weist die Wandung mindestens eine von der Bohrung ausgehende und sich radial in die Wandung erstreckende Ausnehmung auf. Die Bohrung im Gewindebereich kann beispielsweise nicht durchgehend konisch sein, sondern auch Stufen, Kerben oder Rillen aufweisen, die es erlauben, ganz bestimmte Abstufungen im Abreißdrehmoment zu realisieren und/oder das Abreißdrehmoment an einer bestimmten Abreißquerschnittsfläche vorzugeben. So kann die Querschnittsfläche der Wandung von der Kreisringform abweichen, beispielsweise durch Einformen eines Zylinders oder sogar Kegels mit einer von der Kreisform abweichenden Grundfläche in die Bohrung, durch Einschneiden eines Gewindes in die Bohrung, durch Einstechen von in Axialrichtung oder im Umfangsrichtung verlaufenden Nuten in die Bohrung und dergleichen.

Dadurch dass das Außengewinde vorzugsweise ununterbrochen verläuft, insbesondere keine die diskreten Sollbruchstellen definierenden Einschnitte aufweist, ergibt sich über den gesamten Bereich der im Eingriff befindlichen Gewindelänge eine konstante hohe Ausreißfestigkeit des Gewindes. Dadurch sind auch höhere Anzugsdrehmomente möglich. Dies bringt insbesondere bei den in der Energietechnik häufig verwendeten Aluminiumleitern mit Leiterquerschnitten von mehr als 100 mm² und der Bauform rund/mehrdrähtig/verdichtet Vorteile aufgrund des Querleitfähigkeitsproblems zwischen den oxidierten Einzeldrähten des Leiters an der Kontaktstelle.

Dadurch dass die Schraube an kontinuierlichen Stellen abreißen kann, wird unabhängig von der Einschraubtiefe ein Überstand des abgerissenen Gewindebereichs über den Klemmenkörper verhindert. Die bei den bekannten Abreißschrauben aufwendige und nur empirisch zu ermittelnde geometrische Abstimmung des Verbindungssystems aus Klemmenkörper und Abreißschraube, Lage des geklemmten Leiters sowie Lage der Abreißkerbe der Schraube kann entfallen. Die optimale Abreißstelle ist für den Anwender im zugeordneten Querschnittbereich eines zu kontaktierenden Leiters gewährleistet, unabhängig davon, ob als Leiterwerkstoff Kupfer, Aluminium oder ein sonstiger Werkstoff verwendet wird, und unabhängig von einer möglichen Schwankung des Durchmessers des Leiters beispielsweise aufgrund von zulässigen diesbezüglichen Toleranzen oder aufgrund einer Verdichtung des Leiters. Die bisher erforderliche Prüfung, wie die Abreißkerbe der Schraube liegt, und ob überhaupt das Abreißdrehmoment ohne Beschädigung des Gewindes erreicht wird, kann ebenfalls entfallen.

Für die Schraubverbindung bei Energiekabeln ist es notwendig, eine bestimmte Mindestkraft über das Drehmoment der Schraube aufzubringen, um den elektrischen Übergangswiderstand dauerhaft klein zu halten. Beim Einsatz der erfindungsgemäßen Abreißschrauben kann das Gewinde im Klemmenkörper verkürzt werden bei gleicher mechanischer Festigkeit wie bei den bekannten Abreißschrauben. Dadurch ist es möglich, bei gleicher Funktion die Schraubverbindungsklemme mit geringerem Außendurchmesser und/oder mit größerer Innenbohrung zu bauen.

Kleinere Außendurchmesser haben dabei den Vorteil, dass schlankere Schraubverbindungsklemmen gebaut werden können, die in kleinere und damit kostengünstigere Garnituren wie beispielsweise Isolationsmuffen passen. Größere Innenbohrungen haben darüber hinaus den Vorteil, dass der bedienbare Kabelquerschnittsbereich erweitert ist und damit die Zuordnung einer bestimmten Garnitur zu einer größeren Anzahl von Kabelleitertypen möglich ist, wodurch beispielsweise die Lagerhaltungskosten für den Anwender herabgesetzt sind.

Die erfindungsgemäße Abreißschraube ist auch kostengünstiger in der Herstellung, weil die nach dem Stand der Technik erforderlichen schmalen und tiefen Einstiche in das Außengewinde entfallen können. Die Maßhaltigkeit und Reproduzierbarkeit der nach dem Stand der Technik herzustellenden Einstiche definieren darüber hinaus die Exaktheit des eingestellten Abreißdrehmbmentes. Aus diesem Grund muß nach dem Stand der Technik die Maßtoleranz zwischen Schraubengewinde und Gewinde des Klemmenkörpers bisher sehr eng gewählt werden, weil deutlich weniger tragende Gewindefläche zwischen Abreißschraube und Klemmenkörper zur Verfügung stand. Mit der erfindungsgemäßen Abreißschraube kann die Fertigungstoleranz bei gleicher Funktionalität weniger genau gesetzt werden, was eine wirtschaftlichere Produktion ermöglicht.

Die Anwendung der erfindungsgemäßen Abreißschraube liegt vorzugsweise auf dem Gebiet der elektrischen Verbindungstechnik, kann aber auch für beliebige mechanische Befestigungs- und Verbindungsanforderungen verwendet werden, insbesondere für solche Verbindungen, die nach dem Festziehen und Abreißen jedenfalls mit demselben Werkzeug nicht wieder gelöst werden können.

Das bei der erfindungsgemäßen.Abreißschraube in Richtung auf das erste Ende zunehmende Abreißdrehmoment führt dazu, dass bei einer elektrischen Schraubverbindungsklemme ein kleiner Leiter, bei dem die Klemmschraube weiter in den Klemmenkörper eingedreht wird, eine höhere Klemmkraft bis zum Abreißen der Schraube erfährt, als ein größerer Leiter. Um diesem in manchen Anwendungsfällen unerwünschten Effekt entgegenzuwirken, kann das Außengewinde ab einer ersten zulässigen Abreißstelle in Richtung auf das erste Ende schwergängiger ausgeführt werden.

Die Erfindung betrifft auch eine Vorrichtung zur Schraubverbindung, insbesondere elektrischer Leiter, vorzugsweise in einer Schraubverbindungsklemme, mit mindestens einer in einen Klemmenkörper einschraubbaren erfindungsgemäßen Abreißschraube.

Die Erfindung betrifft auch ein System, das eine Abreißschraube und ein Schubelement aufweist, mittels dem durch Drehen auf oder in ein, in einem Bereich zwischen der Abstützung und dem ersten Ende angeordnetes Gewinde der Abreißschraube an der Abstützung eine Druckkraft in die Abreißschraube einleitbar ist, und gleichzeitig durch das Schubelement im Bereich des Gewindes eine Zugkraft in die Abreißschraube einleitbar ist, und dadurch eine das Abreißen bewirkende Zugspannung auf die Abreißschraube ausübbar ist.

Dabei treten beim Abreißen nicht zwangsläufig nur Zugspannungen auf, vielmehr können die auftretenden Belastungen komplex sein und insbesondere sowohl Zugspannungen als auch Torsionsspannungen beinhalten; die durch das Schubelement in die Abreißschraube eingeleiteten Zugspannungen sind aber jedenfalls mit verantwortlich für ein Abreißen der Abreißschraube. Dabei kann beispielsweise ein Schubelement in Form eines Zylinderstiftes verwendet werden, der in die Bohrung der Abreißschraube eingelegt wird und dessen Länge beispielsweise so gewählt ist, dass er über die Abreißschraube übersteht. Anschließend kann beispielsweise eine Hutmutter auf das Außengewinde der Abreißschraube aufgeschraubt werden und mit ihrer Innenseite auf den Zylinderstift drücken und dadurch beim weiteren Aufdrehen auf die Abreißschraube Druckkräfte in die Abreißschraube im Bereich der Abstützung und gleichzeitig Zugkräfte über das Außengewinde in die Abreißschraube einleiten. Besonders vorteilhaft ist dabei, dass in der Bohrung der Abreißschraube kein Innengewinde vorgesehen werden muss.

In einer besonderen Ausführungsart weist das Schubelement eine Werkzeugsangriffsfläche und ein Außengewinde, mit dem es in ein Innengewinde in der Bohrung der Abreißschraube einschraubbar ist; beispielsweise kann das Schubelement als Gewindestift ausgebildet sein.

Die Erfindung betrifft auch ein Verfahren zum Eindrehen einer Abreißschraube, bei dem in die Bohrung ein Schubelement eingesetzt wird, das sich in der Bohrung an einer von dem ersten Ende beabstandeten Abstützung axial abstützt, und mittels dem beim Eindrehen der Abreißschraube an der Abstützung eine Druckkraft in die Abreißschraube eingeleitet wird und gleichzeitig eine Zugkraft in einem dem ersten Ende näheren Abschnitt der Abreißschraube s eingeleitet wird, und dadurch eine das Abreißen bewirkende Zugspannung auf die Abreißschraube ausgeübt wird.

Nach dem Abreißen kann der abgerissene Teil der Abreißschraube von dem Schubelement abgedreht werden, und das Schubelement kann wiederverwendet werden. Das Schubelement kann auch als auswechselbarer Kopf eines Steckschlüssels ausgebildet sein, beispielsweise auch eines motorisch angetriebenen Werkzeuges, wodurch die Montage weiter vereinfacht ist.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht eines ersten Ausführungsbeispiels einer erfindungsgemäßen Abreißschraube,
- Fig. 2: zeigt einen Schnitt entlang II-II des ersten Ausführungsbeispiels der Fig. 1,
- Fig. 3: zeigt eine Seitenansicht eines zweiten Ausführungsbeispieles einer erfindungsgemäßen Abreißschraube,
- Fig. 4: zeigt einen Schnitt entlang IV-IV des zweiten Ausführungsbeispiels der Fig. 3,
- Fig. 5: zeigt eine perspektivische Ansicht des zweiten Ausführungsbeispiels der Fig. 3,
- Fig. 6: zeigt eine Seitenansicht des zweiten Ausführungsbeispiels mit einem eingedrehten Schubelement,
- Fig. 7: zeigt einen Schnitt entlang VII-VII des Ausführungsbeispiels der Fig. 6,
- Fig. 8: zeigt eine perspektivische Ansicht des zweiten Ausführungsbeispiels der Fig. 6,
- Fig. 9: zeigt einen Querschnitt durch ein drittes Ausführungsbeispiel einer erfindungsgemäßen Abreißschraube, und
- Fig. 10: zeigt einen Querschnitt durch eine erfindungsgemäße Schraubverbindungsklemme.

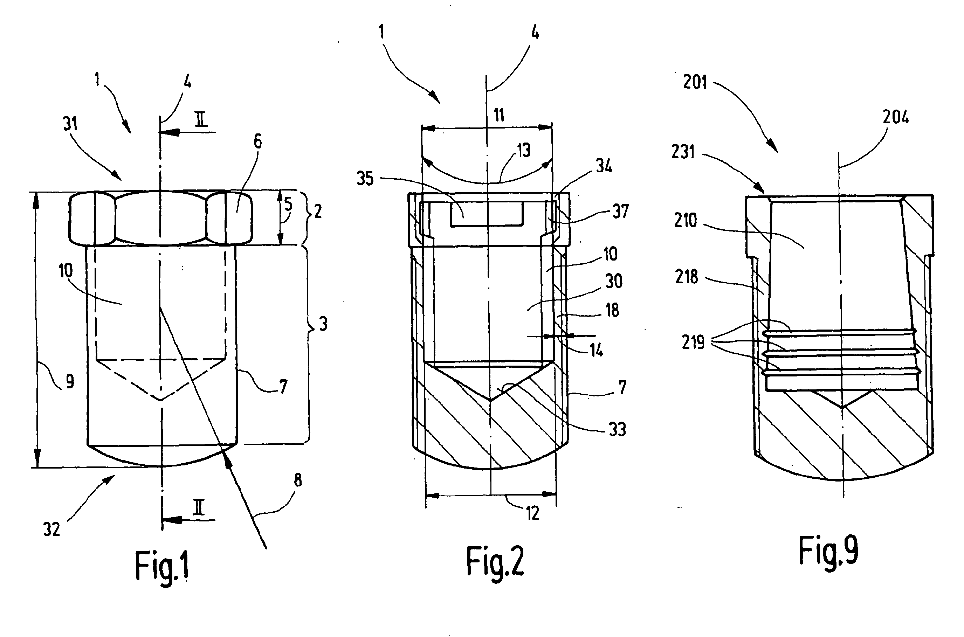

Die Fig. 1 zeigt eine Seitenansicht eines ersten Ausführungsbeispiels einer erfindungsgemäßen Abreißschraube 1, die einen Kopfbereich 2 und einen sich daran anschließenden einstückig mit dem Kopfbereich 2 ausgebildeten Gewindebereich 3 aufweist. Der Kopfbereich 2 weist in Richtung der Längsachse 4 eine Erstreckung 5 von einigen Millimetern auf und bildet eine Werkzeugangriffsfläche 6 in Form eines Außensechskants aus.
Im Ausführungsbeispiel erstreckt sich ein Außengewinde 7 über die im wesentlichen gesamte axiale Länge des Gewindebereichs 3. Der Gewindebereich 3 weist außerdem zentrisch zur Längsachse 4 und vorzugsweise rotationssymmetrisch eine Bohrung 10 auf, die sich bis über die Hälfte der axialen Erstreckung des Gewindebereichs 3 erstreckt.
An einem dem Kopfbereich 2 fernen Ende ist der Gewindebereich 3 kalottenförmig ausgebildet mit einem Radius von beispielsweise etwa 20 mm. Die Gesamtlänge 9 der Abreißschraube 1 beträgt im ersten Ausführungsbeispiel etwa 30 mm.

Die Fig. 2 zeigt einen Schnitt entlang II-II des Ausführungsbeispiels der Fig. 1 der erfindungsgemäßen Abreißschraube 1. Der Durchmesser 11 der Bohrung 10 im Kopfbereich 2 ist einige Zehntel Millimeter bis zu wenigen Millimetern kleiner als der Durchmesser 12 am unteren Ende der Bohrung 10. Der Winkel 13 der konischen Bohrung 10 beträgt im Ausführungsbeispiel weniger als 2°, insbesondere etwa 1°. Dieser Winkel 13 ist ebenso wie die Dicke 14 der Wandung 18 zwischen Bohrung 10 und Außengewinde 7 abhängig von dem aufzubringenden Drehmoment und Abreißdrehmoment unter Berücksichtigung des Werkstoffes der Abreißschraube 1. Für die Dicke 14 der Wandung 18 ergibt sich beispielsweise bei einer Abreißschraube 1 mit einem metrischen M 18 Außengewinde 7 und einem gewünschten Abreißdrehmoment zwischen 10 und 50 Nm, insbesondere zwischen 25 und 35 Nm, ein Wert von etwa 1 mm. Die Tiefe der Bohrung 10 entlang der Längsachse 4 bestimmt im ersten Ausführungsbeispiel eine erste zulässige Abreißstelle der Abreißschraube 1.

Die Abreißschraube 1 ist vorzugsweise einstückig aus einem Werkstoff mit einer ausreichend hohen elektrischen Leitfähigkeit hergestellt, beispielsweise aus Messing. Zur Herabsetzung des Kontaktwiderstandes im Falle eines elektrischen Schraubverbinders weist die Abreißschraube 1 jedenfalls an ihrem kalottenförmigen Ende eine kontaktfördernde Beschichtung auf, beispielsweise aus Zinn, die vorzugsweise auch den Reibungskoeffizient herabsetzt. Vorzugsweise ist die Abreißschraube 1 ganzflächig beschichtet. Dadurch ergibt sich auch ein verbessertes Einschraubverhalten und Kontaktverhalten mit einem Klemmenkörper und/oder einem elektrischen Leiter aus Aluminium.

Die Bohrung 10 ist als Sacklochbohrung ausgeführt und bildet an ihrem Ende eine stumpfwinklige Abstützung 33 aus. Ein in die Bohrung 10 einsetzbares Schubelement 30, das im Ausführungsbeispiel als Zylinderstift mit einem endseitigen Außengewindeabschnitt ausgebildet ist, kann in Anlage an die Abstützung 33 gebracht werden. Hierzu weist die Abreißschraube 1 und insbesondere die Bohrung 10 im Kopfbereich 2 ein Innengewinde 34 auf, in welches das Schubelement 30 mit seinem Außengewinde 37 einschraubbar ist. Das Schubelement 30 weist weiterhin eine Werkzeugangriffsfläche 35 auf, im dargestellten Ausführungsbeispiel einen Innensechskant.

Das Schubelement 30 kann in das Befestigungsmittel 1 eingeschraubt werden, bis es in Anlage an die Abstützung 33 kommt. Ein weiteres Eindrehen verspannt das Schubelement 30 in der Abreißschraube 1.
In diesem Zustand kann das aus Abreißschraube 1 und Schubelement 30 bestehende System bis zum Eindrehen in einen Gegenstand gelagert werden. Für das anfängliche Eindrehen der Abreißschraube 1 in einen Gegenstand, beispielsweise in einen Klemmenkörper, kann entweder die Werkzeugangriffsfläche 6 der Abreißschraube 1 betätigt werden oder die Werkzeugangriffsfläche 35 des Schubelements 30. Zum Abreißen wird die Werkzeugangriffsfläche 35 des Schubelements 30 betätigt.

In vielen Anwendungsfällen kann man auf die Werkzeugangriffsfläche 6 der Abreißschraube 1 verzichten, wodurch diese kostengünstiger herstellbar ist. Zum Abreißen der Abreißschraube 1 wird ein Werkzeug in Eingriff mit der Werkzeugangriffsfläche 35 gebracht und durch Drehen des Werkzeuges wird einerseits die Abreißschraube 1 in den Gegenstand eingedreht und andererseits durch das Schubelement 30 an der Abstützung 33 eine Druckkraft in die Abreißschraube 1 und gleichzeitig im Bereich des Außengewindes 37 des Schubelements 30 eine Zugkraft in die Abreißschraube 1 eingeleitet, derart, dass bei einem weiteren Betätigen des Werkzeuges die Abreißschraube 1 im Bereich zwischen dem Innengewinde 34 und der Abstützung 33 abreißt.

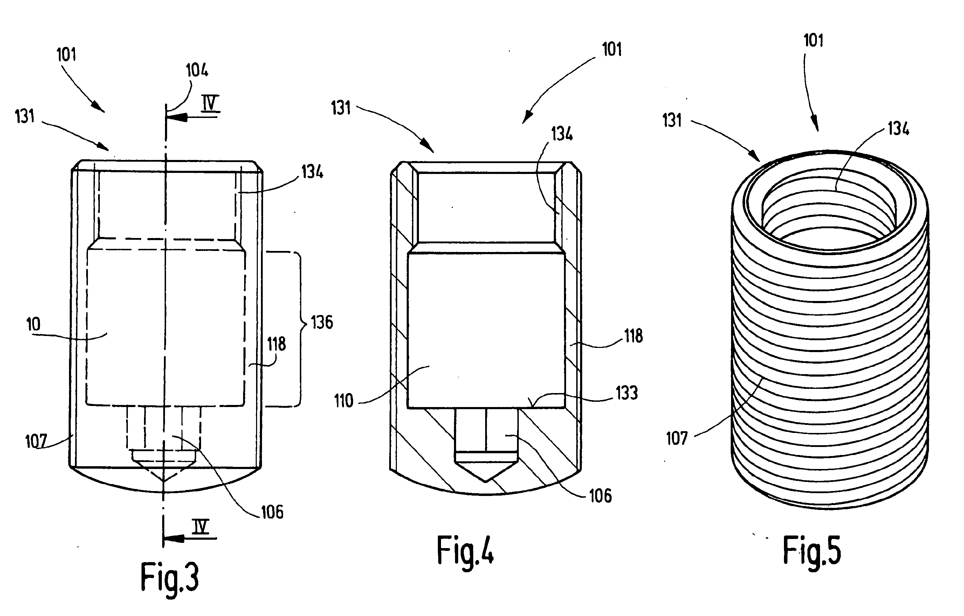

Die Fig. 3 zeigt eine Seitenansicht eines zweiten Ausführungsbeispieles einer erfindungsgemäßen Abreißschraube 101. Dabei handelt es sich im Wesentlichen um einen zylindrischen Gewindestift mit einem durchgehenden Außengewinde 107. Die einzige Werkzeugangriffsfläche der Abreißschraube 101 ist in die Bodenfläche der Bohrung 110 eingebracht und dient vor allem einem weiteren Anziehen oder Lösen der Abreißschraube 101 im abgerissenen Zustand. Wenn eine solche Möglichkeit nicht erforderlich ist, kann auf die Werkzeugangriffsfläche 106 verzichtet werden, und die Abreißschraube 101 ist abgesehen von den Gewindeeinschnitten ein rotationssymmetrischer Körper in Bezug auf die Längsachse 104.

Die Bohrung 110 weist an ihrem dem ersten Ende 131 zugewandten Abschnitt ein Innengewinde 134 auf. In diesem Bereich weist die Bohrung einen kleinere Durchmesser auf als in einem von dem ersten Ende 131 weiter beabstandeten Bereich 136, in dem die Dicke der sich zwischen der Bohrung 110 und dem Außengewinde 107 ergebenden Wandung 118 in Richtung auf das erste Ende 131 kontinuierlich zunimmt.

Die Fig. 4 zeigt einen Schnitt entlang IV-IV des zweiten Ausführungsbeispiels der Fig. 3. Der Öffnungswinkel des die Bohrung 110 im Bereich 136 bildenden Konus beträgt wiederum etwa 1 °. Die Übergänge zwischen dem konischen Bereich 136 der Bohrung 110 und dem Bereich mit dem Innengewinde 134 sowie der weitere Übergang zum ersten Ende 131 hin weisen jeweils eine Fase mit einem Fasenwinkel von etwa 45° auf. Im Gegensatz zum ersten Ausführungsbeispiel ist die Abstützung 133 im Wesentlichen rechtwinklig in Bezug auf die Längsachse 104 ausgerichtet. Die lichte Weite der Werkzeugangriffsfläche 106 ist geringer als der Durchmesser des Innengewindes 134, sodass als Schubelement in die Abreißschraube 101 beispielsweise auch ein gewöhnlicher zylindrischer Gewindestift eingedreht werden kann, der mit seinem Ende in Anlage an die Abstützung 133 kommt.

Die Fig. 5 zeigt eine perspektivische Ansicht des zweiten Ausführungsbeispiels der Abreißschraube 101 der Fig. 3. Die Mantelfläche ist dabei kreiszylindrisch und weist im Wesentlichen über die gesamte axiale Länge das Außengewinde 107 auf, während das Innengewinde 134 nur in einem Bereich von einigen Millimetern, beispielsweise 5 bis 10 mm, ausgehend vom ersten Ende 131 eingeschnitten ist. Das Innengewinde 134 weist vorzugsweise eine Normsteigung auf, beispielsweise ist ein metrisches Normalgewinde. Die Geometrien des Außengewindes 107 und des Innengewindes 134 sind abgestimmt auf das vorgebbare Anzugsdrehmoment, das zum Abreißen der Abreißschraube 101 führen soll. Insbesondere sollte das Verhältnis von aufgebrachtem Drehmoment zu auftretender Kraft bei der Abreißschraube 101 im Wesentlichen identisch sein wie bei der in die Abreißschraube 101 einzudrehenden Innenschraube. Dies kann sowohl über die geometrische Auslegung des Außengewindes 107 und des Innengewindes 134 als auch über eine Beschichtung dieser Gewinde oder den Einsatz von Schmiermitteln bereitgestellt werden.

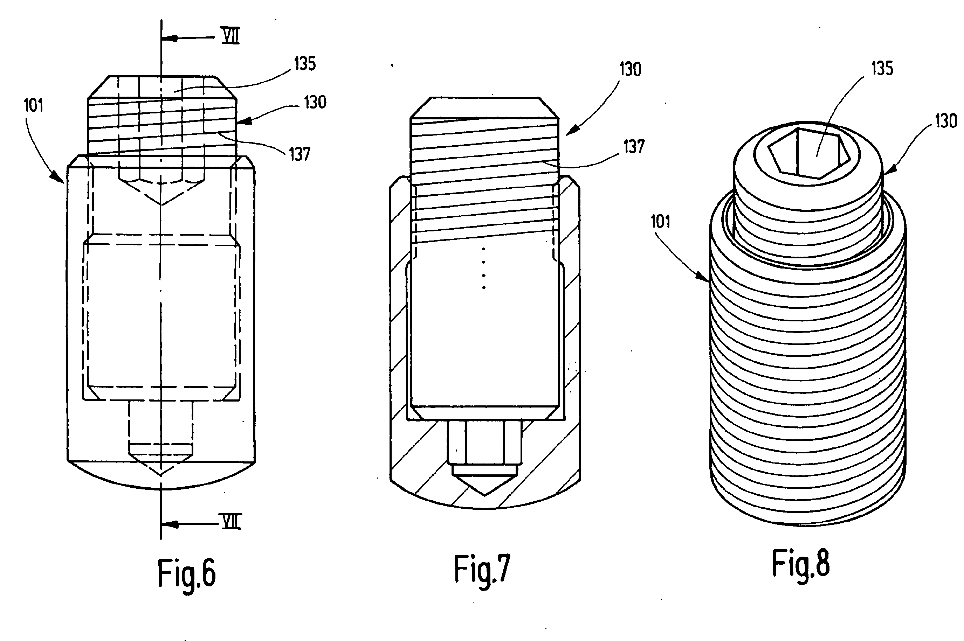

Die Fig. 6 zeigt eine Seitenansicht des zweiten Ausführungsbeispiels der Abreißschraube 101 mit einem eingedrehten Schubelement 130. Wie sich insbesondere aus der Schnittdarstellung entlang VII-VII der Fig. 7 ergibt, in der das Schubelement 130 in der Ansicht dargestellt ist, ist das Schubelement 130 ein kreiszylindrischer Gewindestift mit beidseitig planen Stirnflächen, die jeweils über ein Phase in das Außengewinde 137 übergehen. Mindestens an einem axialen Ende weist das Schubelement 130 eine Werkzeugangriffsfläche 135 auf, mittels der das Schubelement 130 in die Bohrung 110 der Abreißschraube 101 und nach Anlage an der Abstützung 133 die Abreißschraube 101 in den Gegenstand eindreht wird. Die Fig. 8 zeigt eine perspektivische Darstellung des aus der Abreißschraube 101 und dem Schubelement 130 bestehenden Systems.

Die Fig. 9 zeigt einen Querschnitt durch ein drittes Ausführungsbeispiel der Abreißschraube 201. Dabei sind ausgehend von der Bohrung 210 in die Wandung 218 zur Längsachse 204 konzentrische kreisförmige Rillen 219 eingebracht. Die Rillen 219 können in Axialrichtung äquidistant oder in unterschiedlichen Abständen angeordnet sein. Im dargestellten Ausführungsbeispiel nimmt der Durchmesser der Rillen 219 in Richtung auf das erste Ende 231 kontinuierlich ab. Anstelle der voneinander beabstandeten und separierten Rillen 219 kann auch ein eingängiges oder mehrgängiges Gewinde in die Wandung 218 eingebracht sein, dessen Steigung und/oder Drehsinn vorzugsweise unterschiedlich zu dem Außengewinde der Abreißschraube 201 ist.

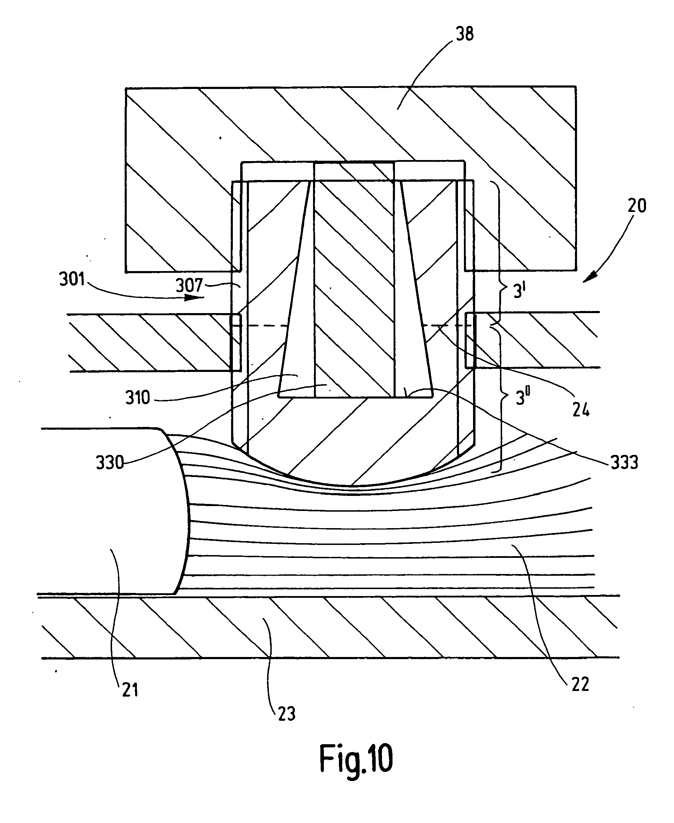

Die Fig. 10 zeigt einen Querschnitt durch eine erfindungsgemäße Schraubverbindungsklemme 20 zum Schraubverbinden eines elektrischen Leiters 21. Der endseitig abisolierte Leiter 21 weist eine Vielzahl von mehr oder weniger dünnen Leiteradern 22 auf, die in dem im wesentlichen rohrförmigen Klemmenkörper 23 durch ein viertes Ausführungsbeispiel einer erfindungsgemäßen Abreißschraube 301 elektrisch verbindend befestigt sind.

Die Abreißschraube 301 ist als zylindrischer Gewindestift mit einer kegelförmigen Bohrung 310 ausgestaltet. In die Bohrung 310 ist als Schubelement 330 ein einfacher Zylinderstift eingesetzt, dessen axiale Länge so gewählt ist, dass er bei Anlage an der Abstützung 333 noch etwas über das erste Ende der Abreißschraube 301 übersteht. Dadurch kann mittels einer Überwurfmutter 38, die beispielsweise als Hutmutter ausgebildet sein kann und auf das Außengewinde 307 der Abreißschraube 301 aufschraubbar ist, über das Schubelement 330 eine Druckkraft auf die Abstützung 333 und damit in die Abreißschraube 301 in einen Bereich eingeleitet werden, der unterhalb des Eingriffs des Außengewindes 307 mit der Gewindebohrung des Klemmenkörpers 23 liegt. Bei einem weiteren Betätigen der Überwurfmutter 38 leitet dieses über das Innengewinde eine Zugkraft in das Außengewinde 307 und damit in die Abreißschraube 301 ein. Beim weiteren Aufschrauben der Überwurfmutter 38 auf die Abreißschraube 301 reißt diese mit einem Abschnitt 3' an der in der Fig. 10 gestrichelt eingezeichneten Linie 24 ab. Der verbleibende Abschnitt 3" fixiert die Leiteradern 22 dauerhaft zuverlässig und gewährleistet einen guten elektrischen Kontakt zwischen Leiteradern 22 und dem Klemmenkörper 23. Die Abrisslinie 24 befindet sich unterhalb der Außenkontur des Klemmenkörpers 23, so dass sowohl das Auftreten von Feldstärkespitzen als auch eine Verletzung einer den Klemmenkörper 23 einschließenden Isolationsmuffe zuverlässig verhindert sind. In einem nicht dargestellten Bereich kann der Klemmenkörper 23 einen weiteren Leiter aufnehmen und insbesondere eine elektrische Verbindung zwischen dem weiteren Leiter und dem geklemmten Leiter 21 herstellen. Der Zylinderstift kann auch einstückig mit der Überwurfmutter ausgebildet sein.

Die erfindungsgemäß über mindestens einen Teil ihrer axialen Erstreckung in Richtung auf das erste Ende kontinuierlich zunehmende Dicke 14 der Wandung 18 ist bei allen beschriebenen Ausführungsbeispielen zwischen dem Kerndurchmesser des Außengewindes 7; 107; 307 und der lichten Weite der Bohrung 10; 110; 210; 310 zu messen. Alternativ zu einer konischen Bohrung 10; 110; 210; 310 in Verbindung mit einem zylindrischen Außengewinde 7; 107; 307 kann auch eine zylindrische Bohrung mit einem entsprechenden konischen Außengewinde realisiert werden. Außerdem können im Bereich des Außengewindes 7; 107; 307 oder im Bereich der Bohrung 10; 110; 210; 310 Einstiche in die Wandung 18; 118; 218 vorgenommen sein, um diskrete Sollbruchstellen zu definieren.

## Patentansprüche

1. Abreißschraube (1) mit einem zwischen einem ersten Ende (31) und einem in Längsrichtung gegenüberliegenden zweiten Ende (32) angeordneten Gewindebereich (3), der über mindestens einen Teil seiner axialen Erstreckung ein Außengewinde (7) zum Eindrehen der Abreißschraube in einen Gegenstand aufweist, und die Abreißschraube eine mindestens zum ersten Ende hin offene Bohrung (10) aufweist, **dadurch gekennzeichnet, dass** die Bohrung (10) eine axiale Abstützung (33) für ein in die Bohrung (10) einsetzbares Schubelement (30) aufweist, mittels dem an der Abstützung (33) beim Eindrehen der Abreißschraube eine Druckkraft in die Abreißschraube einleitbar ist und gleichzeitig eine Zugkraft in einem dem ersten Ende (31) näheren Abschnitt der Abreißschraube einleitbar ist, und dadurch eine das Abreißen bewirkende Zugspannung auf die Abreißschraube ausübbar ist.

2. Abreißschraube nach Anspruch 1, **dadurch gekennzeichnet, dass** die Abreißschraube in der Bohrung (10) ein Innengewinde (34) aufweist, mittels dem das Schubelement (30) in die Bohrung (10) einschraubbar ist.

3. Abreißschraube nach Anspruch 2, **dadurch gekennzeichnet, dass** die Bohrung (10) im Bereich des Innengewindes (34) eine kleinere Weite aufweist als in einem von dem ersten Ende (31) weiter beabstandeten - Bereich.

4. Abreißschraube nach einem der Ansprüche 1 bis 3, **dadurch gekennzeichnet, dass** die Bohrung (10) eine Sacklochbohrung ist.

5. Abreißschraube nach einem der Ansprüche 1 bis 4, **dadurch gekennzeichnet, dass** die Dicke (14) der sich im Gewindebereich (3) zwischen Bohrung (10) und Außengewinde (7) ergebenden Wandung (18) über mindestens einen Teil ihrer axialen Erstreckung in Richtung auf das erste Ende (31) kontinuierlich zunimmt.

6. Abreißschraube nach einem der Ansprüche 1 bis 5, **dadurch gekennzeichnet, dass** der Durchmesser (11; 12) der Bohrung (10) über mindestens einen Teil ihrer axialen Erstreckung ausgehend vom ersten Ende (31) in Richtung auf das zweite Ende (32) kontinuierlich zunimmt.

7. Abreißschraube nach einem der Ansprüche 1 bis 6, **dadurch gekennzeichnet, dass** die Bohrung (10) über mindestens einen Teil ihrer axialen Erstreckung konisch ist, insbesondere dass der Winkel (13) des Konus weniger als 5° beträgt, weiter insbesondere weniger als 2°, und vorzugsweise etwa 1° beträgt.

8. Vorrichtung zum Schraubverbinden elektrischer Leiter (21), insbesondere Schraubverbindungsklemme (20), mit mindestens einer in einen Klemmenkörper (23) einschraubbaren Abreißschraube nach einem der Ansprüche 1 bis 7.

9. System aufweisend eine Abreißschraube (1) mit einem zwischen einem ersten Ende (31) und einem in Längsrichtung gegenüberliegenden zweiten Ende (32) angeordneten Gewindebereich (3), der über mindestens einen Teil seiner axialen Erstreckung ein Außengewinde (7) zum Eindrehen der Abreißschraube in einen Gegenstand aufweist, und die Abreißschraube eine mindestens zum ersten Ende (31) hin offene Bohrung (10) aufweist, **dadurch gekennzeichnet, dass** das System weiterhin ein in die Bohrung (10) einsetzbares Schubelement (30) aufweist, mittels dem durch Drehen auf oder in ein, in einem Bereich zwischen einer Abstützung (33) in der Bohrung (10) und dem ersten Ende (31) angeordnetes Gewinde (7, 34) der Abreißschraube an der Abstützung (33) eine Druckkraft in die Abreißschraube einleitbar ist, und gleichzeitig durch das Schubelement (30) im Bereich des Gewindes (7, 34) eine Zugkraft in die Abreißschraube einleitbar ist, und dadurch eine das Abreißen bewirkende Zugspannung auf die Abreißschraube ausübbar ist.

10. System nach Anspruch 9, **dadurch gekennzeichnet, dass** das Schubelement (30) eine Werkzeugangriffsfläche (35) aufweist.

11. System nach Anspruch 9 oder 10, **dadurch gekennzeichnet, dass** das Schubelement (30) ein Außengewinde (37) aufweist.

12. Verfahren zum Eindrehen einer Abreißschraube (1) mit einem zwischen einem ersten Ende (31) und einem in Längsrichtung gegenüberliegenden zweiten Ende (32) angeordneten Gewindebereich (3), der über mindestens einen Teil seiner axialen Erstreckung ein Außengewinde (7) zum Eindrehen der Abreißschraube in einen Gegenstand aufweist, und die Abreißschraube eine mindestens zum ersten Ende (31) hin offene Bohrung (10) aufweist, **dadurch gekennzeichnet, dass** in die Bohrung (10) ein Schubelement (30) eingesetzt wird, das sich in der Bohrung (10) an einer von dem ersten Ende (31) beabstandeten Abstützung (33) axial abstützt, und mittels dem beim Eindrehen der Abreißschraube an der Abstützung (33) eine Druckkraft in die Abreißschraube eingeleitet wird und gleichzeitig eine Zugkraft in einem dem ersten Ende (31) näheren Abschnitt der Abreißschraube eingeleitet wird, und dadurch eine das Abreißen bewirkende Zugspannung auf die Abreißschraube ausgeübt wird.

## Claims

1. Shearing screw (1) having a threaded region (3) which is arranged between a first end (31) and a second opposite end (32) in the longitudinal direction and which has, over at least a portion of the axial extent thereof, an external thread (7) for introducing the shearing screw into an object, and the shearing screw has a hole (10) which is open at least towards the first end, **characterised in that** the hole (10) has an axial support (33) for a thrust element (30) which can be introduced into the hole (10) and by means of which a pressing force can be introduced into the shearing screw at the support (33) when the shearing screw is introduced and a tensile force can simultaneously be introduced in a portion of the shearing screw that is nearer the first end (31), and a tensile stress which brings about the shearing can thereby be applied to the shearing screw.

2. Shearing screw according to claim 1, **characterised in that** the shearing screw has, in the hole (10), an internal thread (34) by means of which the thrust element (30) can be screwed into the hole (10).

3. Shearing screw according to claim 2, **characterised in that** the hole (10) has a smaller width in the region of the internal thread (34) than in a region further away from the first end (31).

4. Shearing screw according to any one of claims 1 to 3, **characterised in that** the hole (10) is a blind hole.

5. Shearing screw according to any one of claims 1 to 4, **characterised in that** the thickness (14) of the wall (18) which is produced in the threaded region (3) between the hole (10) and the external thread (7) increases continuously in the direction towards the first end (31) over at least a portion of the axial extent thereof.

6. Shearing screw according to any one of claims 1 to 5, **characterised in that** the diameter (11; 12) of the hole (10) increases continuously over at least a portion of the axial extent thereof from the first end (31) in the direction towards the second end (32).

7. Shearing screw according to any one of claims 1 to 6, **characterised in that** the hole (10) is conical over at least a portion of the axial extent thereof, in particular **in that** the angle (13) of the cone is less than 5°, is further particularly less than 2°, and preferably is approximately 1°.

8. Device for the screw-connection of electrical conductors (21), in particular a screw connection clamp (20), having at least one shearing screw which can be screwed into a clamping member (23) and which is in accordance with any one of claims 1 to 7.

9. System having a shearing screw (1) having a threaded region (3) which is arranged between a first end (31) and a second opposite end (32) in the longitudinal direction and which has, over at least a portion of the axial extent thereof, an external thread (7) for introducing the shearing screw into an object, and the shearing screw has a hole (10) which is open at least towards the first end (31), **characterised in that** the system further has a thrust element (30) which can be introduced into the hole (10) and by means of which a pressing force can be introduced into the shearing screw by rotation onto or into a thread (7, 34) of the shearing screw on a support (33), which thread (7, 34) is arranged in a region between the support (33) in the hole (10) and the first end (31), and a tensile force can be introduced into the shearing screw simultaneously by the thrust element (30) in the region of the thread (7, 34), and a tensile stress which brings about the shearing can thereby be applied to the shearing screw.

10. System according to claim 9, **characterised in that** the thrust element (30) has a tool engagement face (35).

11. System according to claim 9 or claim 10, **characterised in that** the thrust element (30) has an external thread (37).

12. Method for introducing a shearing screw (1) having a threaded region (3) which is arranged between a first end (31) and a second opposite end (32) in the longitudinal direction and which has, over at least a portion of the axial extent thereof, an external thread (7) for introducing the shearing screw into an object, and the shearing screw has a hole (10) which is open at least towards the first end (31), **characterised in that** there is introduced into the hole (10) a thrust element (30) which is axially supported in the hole (10) on a support (33) remote from the first end (31) and by means of which a pressing force is introduced into the shearing screw when the shearing screw is introduced at the support (33), and simultaneously a tensile force is introduced in a portion of the shearing screw that is nearer the first end (31), and a tensile stress which brings about the shearing is thereby applied to the shearing screw.

## Revendications

1. Vis (1) frangible ayant une partie (3) filetée disposée entre une première extrémité (31) et une deuxième extrémité (32) opposée dans la direction longitudinale, partie filetée qui a sur au moins une partie de son étendue axiale un filetage (3) extérieur pour visser la vis frangible dans un objet et la vis frangible a, au moins vers la première extrémité, un perçage (10) ouvert, **caractérisée en ce que** le perçage (10) a un appui (33) axial pour un élément (30) de poussée, qui peut être inséré dans le perçage (10) et au moyen duquel il peut être appliqué à l'appui (33), lors du vissage de la vis frangible, une force de compression à la vis frangible et en même temps une force de traction dans une partie de la vis frangible assez proche de la première extrémité (31), et appliquer ainsi à la vis frangible une contrainte de traction provoquant la rupture.

2. Vis frangible suivant la revendication 1, **caractérisée en ce que** la vis frangible a dans le perçage (10) un taraudage (34) au moyen duquel l'élément (30) de poussée peut être vissé dans le perçage (10).

3. Vis frangible suivant la revendication 2, **caractérisé en ce que** le perçage (10) a dans la partie du taraudage (34) une largeur plus petite que dans une partie plus éloignée de la première extrémité.

4. Vis frangible suivant l'une des revendications 1 à 3, **caractérisée en ce que** le perçage (10) est un trou borgne.

5. Vis frangible suivant l'une des revendications précédentes 1 à 4, **caractérisée en ce que** l'épaisseur (14) de la paroi (18) se trouvant dans la partie (3) filetée entre le perçage (10) et le filetage (7) extérieur augmente continuellement en direction de la première extrémité (31), au moins sur une partie de son étendue axiale.

6. Vis frangible suivant l'une des revendications 1 à 5, **caractérisée en ce que** le diamètre (11 ;12) du perçage (10) augmente continuellement à partir de la première extrémité (31) en direction de la deuxième extrémité (32), au moins sur une partie de son étendue axiale.

7. Vis frangible suivant l'une des revendications 1 à 6, **caractérisée en ce que** le perçage (10) est conique au moins sur une partie de son étendue axiale, l'angle (13) du cône étant notamment plus petit que 5° et, mieux encore, plus petit que 2° et, de préférence, d'environ 1°.

8. Dispositif de vissage de conducteur (21) électrique, notamment de borne (20) de liaison à vis, comprenant au moins une vis frangible suivant l'une des revendications 1 à 7 pouvant se visser dans un corps (23) de borne.

9. Système ayant une vis (1) frangible comprenant une partie (3) filetée qui est disposée entre une première extrémité (31) et une deuxième extrémité (32) opposée dans la direction longitudinale et qui a, sur au moins une partie de son étendue axiale, un filetage (7) extérieur pour le vissage de la vis frangible dans un objet et la vis frangible a au moins un perçage (10) ouvert vers la première extrémité (31), **caractérisé en ce que** le système a en outre un élément (30) de poussée, qui peut être inséré dans le perçage (10) et au moyen duquel, par rotation sur ou dans une partie comprise entre un appui (33) dans le perçage (10) et le filetage (7 ;34) disposé à la première extrémité (31) de la vis frangible, il peut être appliqué sur l'appui (33) une force de compression dans la vis frangible et en même temps par l'élément (30) de poussée il peut être appliquée à la vis frangible une force de traction dans la partie du filetage (7 ; 34) et appliquer ainsi à la vis frangible une contrainte de traction provoquant la rupture.

10. Système suivant la revendication 9, **caractérisé en ce que** l'élément (30) de poussée a une surface (35) d'attaque d'un outil.

11. Système suivant la revendication 9 ou 10, **caractérisé en ce que** l'élément (30) de poussée a un filetage (37) extérieur.

12. Procédé pour visser une vis frangible ayant une partie (3) filetée qui est disposée entre une première extrémité (31) et une deuxième extrémité (32) opposée dans la direction longitudinale et qui a, sur au moins une partie de son étendue axiale, un filetage extérieur pour visser la vis frangible dans un objet et la vis frangible a un perçage (10) ouvert au moins vers la première extrémité (31), **caractérisé en ce que** dans le perçage (10) est inséré un élément (30) de poussée, qui s'appuie axialement dans le perçage (10) sur un appui (33) à distance de la première extrémité (31) et au moyen duquel, lors de vissage de la vis frangible, il s'applique sur l'appui (33) une force de compression de la vis frangible et en même temps une force de traction est appliquée dans une partie de la vis frangible plus proche de la première extrémité (31) et il est ainsi appliquée à la vis frangible une contrainte de traction provoquant la rupture.
